# EUROPEAN PATENT APPLICATION

(11) **EP 4 790 767 A1**
(43) Date of publication of application: **12.08.2026**
(21) Application number: 24841676.0
(22) Date of filing: 03.12.2024
(51) Int. Cl.: H01M 4/58, H01M 4/13, C01B 25/37, H01M 4/136, H01M 10/0525, C01B 25/45

(54) **IRON PHOSPHATE MATERIAL AND PREPARATION METHOD THEREFOR, POSITIVE ELECTRODE MATERIAL, POSITIVE ELECTRODE SHEET, AND SECONDARY BATTERY**

(30) Priority: 27.11.2024 CN 202411721854
(71) Applicant: Hubei Hongrun High-Tech New Materials Co., Ltd., Ezhou, Hubei 436070 (CN)
(72) Inventor: XU, Shanwan, Ezhou, Hubei 436070 (CN); GUO, Miyan, Ezhou, Hubei 436070 (CN); FANG, Yuanyuan, Ezhou, Hubei 436070 (CN)
(74) Representative: Dehns Germany Partnerschaft mbB
(86) International application number: PCT/CN2024/136493
(87) International publication number: WO 2026/113033

(57) **Abstract**

The present application belongs to the field of nanomaterial technology, and provides an iron phosphate material and a preparation method therefor, a cathode material, a cathode sheet, and a secondary battery, wherein the iron phosphate material comprises iron phosphate particles, the iron phosphate particles have a ring structure, and the D50 particle size of the iron phosphate particles is less than 1 µm. The iron phosphate material of the present application can effectively reduce the energy consumption of a sanding process and improve the process efficiency when used as a precursor to prepare lithium iron phosphate.

## Description

### Technical Field

The present application relates to the technical field of inorganic materials, and in particular, to an iron phosphate material and a preparation method therefor, a cathode material, a cathode sheet, and a secondary battery.

### Background

Iron phosphate is an off-white or grayish-white powder, and can form various hydrates, including iron phosphate dihydrate, iron phosphate tetrahydrate, iron phosphate octahydrate, etc. In general, iron phosphate dihydrate (relative molecular weight: 186.82) is produced and, upon heating to about 160°C, begins to lose water of crystallization. Iron phosphate has abundant framework structures, unique ion exchange performance and electrochemical properties, and is an excellent material for preparing lithium iron phosphate which is a cathode material for lithium ion batteries and widely applied in the field of new energy sources (e.g. the field of new energy automobiles).

In the prior art, the conductive properties of lithium iron phosphate are improved by nanominiaturization of the key raw material, i.e. iron phosphate, for the synthesis of lithium iron phosphate or lithium iron manganese phosphate. Currently, the particle diameter D50 of iron phosphate prepared by using a conventional process is generally between 2 µm and 30 µm; therefore, when preparing lithium iron phosphate or lithium iron manganese phosphate that achieves the expected electrical conductivity, plenty of energy needs to be consumed to sand the iron phosphate particles to a nanometer level, which consumes a lot of energy.

### Summary

In view of the technical problem existing in the background art, the present application provides an iron phosphate material and a preparation method therefor, a cathode material, a cathode sheet, and a secondary battery. A nanoscale iron phosphate material can be easily obtained from the iron phosphate material provided in the present application, thereby reducing energy consumption required for nanominiaturization, and an iron phosphate material having a smaller particle size can be easily obtained, and thus the electrical conductivity of a prepared lithium iron phosphate material can be easily improved.

According to a first aspect, an embodiment of the present application provides an iron phosphate material, wherein the iron phosphate material comprises iron phosphate particles, at least one of the iron phosphate particles has a ring structure, and the D50 particle size of the iron phosphate particles is less than 1 µm.

In the technical solution of the embodiment of the present application, a small-sized iron phosphate particle material having a ring structure and a D50 particle size of less than 1 µm is used as a precursor to prepare lithium iron phosphate. When the iron phosphate particle material is used as a precursor to prepare lithium iron phosphate, the energy consumption required for nanominiaturization is reduced, and an iron phosphate material with smaller particle size can be easily obtained, and thus the electrical conductivity of the prepared lithium iron phosphate material can be easily improved.

In some embodiments, a particle size agglomeration index of the iron phosphate particles satisfies: 0.5 ≤ (D90-D10)/D50 ≤ 2.

In these embodiments, the particle size distribution of the iron phosphate particles is more concentrated, which is conducive to the improvement of the grinding efficiency and sanding to obtain nanoscale iron phosphate particles with uniform size, so that lithium ions can be evenly distributed in the iron phosphate particles during subsequent preparation of lithium iron phosphate, and lithium iron phosphate with high electrical conductivity and excellent electrochemical properties can be obtained.

In some embodiments, the ratio of the average inner diameter to the average outer diameter of the ring structure of an iron phosphate particles is among (0.35-0.48):1.

In these embodiments, in the technical solution of the embodiment of the present application, ring diameters (the distance between the outer diameter and the inner diameter of the circular ring) of iron phosphate particles influences the grinding efficiency and morphology of the ground particles. Iron phosphate particles with excessively large ring diameters are not conducive to improving the grinding efficiency, and iron phosphate particles with excessively small ring diameters tend to generate irregular fractures during grinding. The iron phosphate particles located within the described size range are beneficial for improving the grinding efficiency and obtaining nanoscale iron phosphate particles with small sizes which have regular morphologies and uniform sizes, so that lithium ions are uniformly distributed in the iron phosphate particles during the subsequent preparation process of the lithium iron phosphate.

In some embodiments, the average internal diameter of the ring structure of an iron phosphate particle is in the range of 178 nm-559 nm, and the average outer diameter of the ring structure of an iron phosphate particles is in the range of 474.60 nm-1188.90 nm.

In these embodiments above, the iron phosphate particles within the size range above are conducive to improving the grinding efficiency and obtaining nanoscale iron phosphate particles with regular morphologies and uniform sizes.

In some embodiments, the specific surface area of the iron phosphate material is 13 m²/g to 20 m²/g.

In these embodiments, in the process of preparing lithium iron phosphate, larger specific surface areas of the iron phosphate particles are conducive to the uniform distribution of lithium ions in the iron phosphate material, and can increase the contact area between the iron phosphate particles and promote the bonding between the iron phosphate particles, thereby improving the overall conductivity and cycle stability of the prepared lithium iron phosphate material. In the present application, the specific surface area of the iron phosphate material is controlled to be within the described range, which facilitates grinding to obtain nanoscale iron phosphate particles with high specific surface areas, thereby preparing a lithium iron phosphate material having high conductivity and high cycle performance.

According to a second aspect, an embodiment of the present application provides a preparation method for an iron phosphate material, comprising the following steps:
preparing an iron-phosphorus solution comprising a ferrous ion source, a chloride ion source and a phosphate ion source, wherein the pH value of the iron-phosphorus solution is not greater than 1.5;
heating the iron-phosphorus solution to 70°C or more, and then adding an oxidant to the iron-phosphorus solution to obtain an iron phosphate slurry;
heating the iron phosphate slurry until boiling, and after the iron phosphate slurry changes color, continuing to maintain the boiling state for 1.5 h-4 h to obtain a first slurry;
mixing the first slurry with low temperature dilution water to obtain a second slurry; and
performing solid-liquid separation on the second slurry to obtain an iron phosphate material.

In the technical solution of the embodiment of the present application, the system for preparing the iron phosphate material uses a chlorine ion system, the pH value of the iron-phosphorus solution is controlled to inhibit the electrolysis of ferrous ions and reduces the agglomeration of subsequently generated iron phosphate ions, the temperature of the iron-phosphorus solution is controlled, an oxidation treatment is performed on ferrous ions to obtain an iron phosphate-containing slurry, then the iron phosphate-containing slurry is heated until boiling, the volatility and complexibility of hydrogen chloride are used to form an iron phosphate-hydrochloric acid complex, then low-temperature dilution water is added to the first slurry, and decomplexation is performed by dilution-cold excitation, so as to finally prepare iron phosphate particles having D50 particle sizes less than 1 µm and having ring structures, and then it is easier to obtain a nanoscale iron phosphate material. When used as a precursor to prepare lithium iron phosphate, the iron phosphate material is conducive to reducing the energy consumption required for nanominiaturization and makes it easier to obtain an iron phosphate material having a smaller particle size, and thus the conductivity of the prepared lithium iron phosphate material can be easily improved.

In some embodiments, the molar ratio of iron element, phosphorus element and chlorine element in the iron-phosphorus solution is (0.8-1.2):(0.8-2):(0.5-3).

In these embodiments above, the iron element, phosphorus element and chlorine element in the system affect the yield, sizes and morphologise of the resulting iron phosphate particles. For example, a higher iron-chloride ratio and phosphorus-chloride ratio facilitate precipitation of iron phosphate to obtain a higher iron phosphate yield, and a smaller phosphorus-chloride ratio facilitates the formation of an iron phosphate-hydrochloric acid complex in a boiling stage at a high temperature, thereby reducing agglomeration of iron phosphate , so as to obtain an iron phosphate material having a small size and good dispersibility. By controlling iron element, phosphorus element and chlorine element within the described ratio, an iron phosphate material comprising of iron phosphate particles with ring structures and D50 particle sizes of less than 1 µm can be obtained at a high yield.

In some embodiments, the molar ratio of iron element, phosphorus element and chlorine element in the iron-phosphorus solution is 1:(1-1.2):(2-3).

In these embodiments above, controlling iron element, phosphorus element and chlorine element within the range above is conducive to the full precipitation of iron element to form iron phosphate to obtain a higher yield, and the obtained iron phosphate material has a regular morphology and good particle dispersibility.

In some embodiments, the oxidant is an aqueous solution of hydrogen peroxide, the molar ratio of hydrogen peroxide in the aqueous solution of hydrogen peroxide to iron element in the iron-phosphorus solution is (0.6-1):1, and the concentration of iron element in the iron-phosphorus solution is 0.5 mol/L-2.0 mol/L.

In the embodiments above, the ratio of hydrogen peroxide to iron element in the iron-phosphorus solution and the concentration of iron element affect the oxidation rate of ferrous ions, and then affect the generation rate of the iron phosphate crystal nuclei and the growth rate of the crystal. The conditions above are conducive to obtaining an iron phosphate slurry having smaller iron phosphate particles, are conducive to generating more iron phosphate-hydrochloric acid complexes in the subsequent high-temperature boiling stage, and are conducive to the iron phosphate-hydrochloric acid complexes being stably and evenly dispersed in the first slurry, reducing the agglomeration of iron phosphate particles, thereby generating an iron phosphate material having a smaller size and good particle dispersibility in the subsequent dilution-cold excitation decomplexation stage.

In some embodiments, the aqueous solution of hydrogen peroxide is added to the iron phosphorus solution by means of dropwise addition, the time for the dropwise addition is 5 min-15 min, and after the dropwise addition is completed, stirring is performed for 5 min-15 min to obtain an iron phosphate slurry.

In the embodiments above, the hydrogen peroxide dropwise addition rate and stirring time affect the generation of iron phosphate crystal nuclei and the crystal growth. The conditions above are conducive to the rapid generation of iron phosphate nuclei and the inhibition of crystal growth, thereby obtaining an iron phosphate slurry having smaller iron phosphate particles, so that more iron phosphate-hydrochloric acid complexes are generated in the subsequent high-temperature boiling stage, and the iron phosphate-hydrochloric acid complexes are stably and evenly dispersed in the first slurry, reducing the agglomeration of iron phosphate particles, thereby generating an iron phosphate material having a small size and good particle dispersibility in the subsequent dilution-cold excitation decomplexation stage.

In some embodiments, heating an iron phosphate solution to 70°C or higher, and then adding an oxidant to the iron phosphate solution to obtain an iron phosphate slurry comprise the steps of:
heating the iron phosphorus solution to 70°C-80°C, and then adding an aqueous solution of hydrogen peroxide to the iron phosphorus solution.

In the embodiments above, using the aqueous solution of hydrogen peroxide and controlling the temperature of the iron phosphorus solution to 70°C-80°C are conducive to the full reaction of hydrogen peroxide with the iron-phosphorus solution, improving the oxidation efficiency of ferrous ions, facilitating the rapid generation of a large number of iron phosphate particles with small sizes at this stage, facilitating the generation of more iron phosphate-hydrochloric acid complexes in the subsequent high-temperature boiling stage, and facilitating the stable and uniform dispersion of the iron phosphate-hydrochloric acid complexes in the first slurry, thereby preparing an iron phosphate material having a small size and good particle dispersibility.

In some embodiments, the aqueous solution of hydrogen peroxide has a mass fraction of hydrogen peroxide of 20%-30%.

In the embodiments above, the hydrogen peroxide content within the range above is conducive to the rapid generation of iron phosphate particles, and can effectively reduce the decomposition loss of hydrogen peroxide during the oxidation of ferrous ions.

In some embodiments, the ferrous ion source is selected from one or more of ferrous nitrate and ferrous chloride.

In the embodiments above, the described ferrous ion source can provide necessary ferrous ions for the system of iron-phosphorus solution reaction. When ferrous nitrate is used as a ferrous ion source, free nitrate ions in the system can form nitric acid in the subsequent boiling process and be removed by volatilization. When ferrous chloride is used as a ferrous salt, free chlorine ions in the system can be volatilized and removed in the form of hydrochloric acid in the subsequent boiling process, so as to reduce the acidity of the system and reduce impurities, and facilitate subsequent acquisition of iron phosphate having a small size and a high yield.

In some embodiments, the ferrous ion source is ferrous chloride.

In the embodiments above, ferrous chloride introduces chloride ions while providing ferrous ions, and then chloride ions can be complexed with iron phosphate particles to form iron phosphate-hydrochloric acid complexes, thereby reducing the agglomeration of iron phosphate and avoiding the introduction of impurities such as nitrogen and oxygen.

In some embodiments, the chloride ion source is selected from at least one of hydrochloric acid and ferrous chloride.

In the embodiments above, both hydrochloric acid and ferrous chloride can provide chloride ions required for the reaction and reduce the introduction of other impurity cations.

In some embodiments, the phosphate ion source is selected from at least one of H₃PO₄, (NH₄)H₂PO₄, and (NH₄)₂HPO₄.

In the embodiments above, H₃PO₄, (NH₄)H₂PO₄, and (NH₄)₂HPO₄ may provide phosphate ions needed for the reaction.

In some embodiments, the preparation steps for the iron-phosphorus solution are as follows:
mixing a ferrous ion source, a chloride ion source, a phosphate ion source, and water, and controlling the pH value to be no greater than 1.5, so as to obtain an iron-phosphorus solution.

In some embodiments, the desired iron-phosphorus solution can be obtained by directly mixing the ferrous ion source, the chloride ion source, and the phosphate ion source with water, and the process is simple.

In some embodiments, the ferrous ion source is ferrous chloride, the chloride ion source is selected from ferrous chloride and hydrochloric acid, and the phosphate ion source is phosphoric acid.

In the embodiments above, ferrous chloride serves as both a ferrous ion source and a chloride ion source, hydrochloric acid serves as a chloride ion source and provides acidity conditions for the reaction, and phosphate serves as a phosphorus source and can provide acidity conditions for the reaction. By means of the formulation ratio of the described raw materials, the pH value of the system and the elemental ratio of the ferrous ions, phosphate ions and chloride ions can be controlled, and no additional acid or alkali (such as sulfuric acid, nitric acid, sodium hydroxide, and ammonia water) needs to be added. While preparing an iron phosphate material comprising of iron phosphate particles with ring structures and smaller sizes, the introduction of impurity ions (such as sulfate, nitrate, sodium ion, NH₄⁺, etc.) can be minimized to prepare a high-purity iron phosphate material, thereby improving the cycle life and capacity retention rate of batteries containing lithium iron phosphate which is prepared by using the iron phosphate material as a raw material.

In some embodiments, the preparation steps for the iron-phosphorus solution are as follows:
heating a dilute aqueous hydrochloric acid solution to 50°C-70°C, then adding elemental iron, and reacting same to obtain a ferrous chloride solution, wherein the dilute aqueous hydrochloric acid solution has a concentration of 1.0 mol/L-4.0 mol/L; and
adding phosphoric acid and water to the ferrous chloride solution, mixing and controlling the pH value to be not greater than 1.5, so as to obtain an iron-phosphorus solution.

In the embodiments above, the iron-phosphorus solution is prepared by using an elemental iron material, an aqueous hydrochloric acid solution and phosphoric acid as raw materials, so that the introduction of impurity ions can be minimized, and a high-purity iron phosphate material can be prepared.

In some embodiments, the elemental iron material is one or more selected from iron sheets, iron powder, and iron blocks.

In some embodiments, the pH value of the iron-phosphorus solution is 0.2-1.5.

In the embodiments above, the pH value of the iron-phosphate solution affects the generation rate and yield of iron phosphate. A higher pH value easily causes agglomeration of plenty of iron phosphate particles during the oxidation stage. A lower pH value is adverse to precipitation of iron phosphate. Within the pH value range above, it is more beneficial to obtain a high yield and a small size of iron phosphate material.

In some embodiments, the temperature difference between the second slurry and the first slurry is no less than 60°C.

In the embodiments above, a higher temperature difference is more favorable for iron phosphate-hydrochloric acid decomplexation and for cold quenching refinement, thereby generating an iron phosphate material having a smaller size.

In some embodiments, the temperature difference between the temperature of the second slurry and the temperature of the first slurry is 70°C-90°C.

In the embodiments above, the temperature difference between the temperature of the second slurry and the temperature of the first slurry is controlled within the temperature range, which is more beneficial to obtain a small size of the iron phosphate material and obtain a higher yield.

In some embodiments, the mass ratio of the first slurry to the low temperature dilution water is 1:(10-20).

In the embodiments above, the low-temperature dilution water is used for quick cooling and dilution of the system, thereby facilitating the decomplexation of the iron phosphate-hydrochloric acid complex to generate an iron phosphate material. The mass ratio of the first slurry to the low-temperature dilution water within the described range facilitates the rapid and sufficient decomplexation of the iron phosphate-hydrochloric acid complex, and thus a small-sized iron phosphate material having a relatively high purity and a relatively high yield is obtained.

In some embodiments, after mixing the first slurry with the low temperature dilution water, the mixture is stirred until it changes color to obtain the second slurry.

In the embodiments above, in the process of high-temperature boiling treatment, an iron phosphate-hydrochloric acid complex is generated, and after adding the low-temperature dilution water and mixing same, iron phosphate precipitates after decomplexation, and the color of the slurry changes.

In some embodiments, the second slurry is subjected to solid-liquid separation, and the obtained solid is washed and then dried at a temperature of 90°C-120°C, so as to obtain the iron phosphate material.

In the embodiments above, water can be rapidly removed under the described conditions to obtain the iron phosphate material.

In a third aspect, an embodiment of the present application provides a cathode material, comprising at least one of a lithium iron phosphate material and a lithium iron manganese phosphate material, wherein the lithium iron phosphate material is prepared from the foregoing iron phosphate material or prepared from the iron phosphate material prepared by the foregoing preparation method for an iron phosphate material, and the lithium iron manganese phosphate material is prepared from the foregoing iron phosphate material or prepared from the iron phosphate material prepared by the foregoing preparation method for an iron phosphate material.

In a fourth aspect, an embodiment of the present application provides a cathode sheet. The cathode sheet comprises the cathode material above.

In these embodiments, the cathode sheet comprises the cathode material above, and thus has the advantages of reducing the energy consumption and costs of preparing the cathode sheet and improving the conductive properties of the cathode sheet.

In a fifth aspect, an embodiment of the present application provides a secondary battery, wherein the electrode sheet used in the cathode is the cathode sheet above.

In these embodiments, the secondary battery comprises the cathode sheet above, and thus has the advantages of reducing the energy consumption and costs in preparation of the secondary battery and improving electrochemical properties of the secondary battery.

In a sixth aspect, an embodiment of the present application provides an electric device, comprising the secondary battery above.

In this embodiment, the electric device comprises the secondary battery above, and thus has the advantages of reducing the energy consumption and costs of the preparation of the electric device and improving the electrochemical properties of the electric device.

The description above is only an overview of the technical solutions of the present application. In order to more clearly understand the technical means of the present application and implement the present application according to the content of the description, and in order to make the described and other objects, features and advantages of the present application more obvious and easy to understand, the specific embodiments of the present application are specifically listed below.

### Brief Description of the Drawings

In order to more clearly illustrate the technical solutions of the present application, the following is a brief introduction to the drawings used in the present application. Apparently, the accompanying drawings in the following description show merely some embodiments of the present application, and a person skilled in the art may still derive other drawings from these accompanying drawings without creative efforts.
Fig. 1 is a scanning electron microscope (SEM) test result image of the iron phosphate material prepared in Example 1;
Fig. 2 is a SEM test result image of the iron phosphate material prepared in Example 1;
Fig. 3 is a flowchart of steps of a preparation method for an iron phosphate material according to an embodiment of the present application;
Fig. 4 is an X-ray diffraction (XRD) test result graph of the iron phosphate material prepared in Example 1, wherein the horizontal axis indicates a diffraction angle, i.e. Two-Theta (°), and the vertical axis indicates a diffraction intensity, i.e. Intensity (Counts);
Fig. 5 is a SEM test result image of the iron phosphate material prepared in Comparative Example 6;
Fig. 6 is a SEM test result image of the iron phosphate material prepared in Comparative Example 6; and
Fig. 7 is an XRD test result graph of the iron phosphate material prepared in Comparative Example 6, wherein the horizontal axis indicates a diffraction angle, i.e. Two-Theta (°), and the vertical axis indicates a diffraction intensity, i.e. Intensity (Counts).

### Detailed Description of the Embodiments

The following describes the embodiments of the technical solutions of the present application in detail with reference to the accompanying drawings. The following embodiments are only intended to describe the technical solutions of the present application more clearly, and therefore are only examples, but are not intended to limit the scope of protection of the present application.

Unless otherwise defined, all technical and scientific terms used herein have the same meaning as commonly understood by a person skilled in the art to which the present application belongs. The terms used herein are for the purpose of describing particular embodiments only and are not intended to limit the present application. The terms "comprising" and "having" and any variations thereof in the description, claims, and drawings of the present application are intended to cover non-exclusive inclusions.

In the description of the embodiments of the present application, the technical terms "first", "second", etc. are only used for distinguishing different objects, and cannot be understood as indicating or implying relative importance or implicitly indicating the number, specific order or primary and secondary relationship of the indicated technical features. In the description of the embodiments of the present application, "a plurality of" means two or more unless specified otherwise.

Reference herein to "an embodiment" means that a particular feature, structure, or characteristic described in connection with the embodiment can be included in at least one embodiment of the present disclosure. The appearance of this phrase in various places in the description does not necessarily refer to the same embodiment or independent or alternative embodiments mutually exclusive of other embodiments. It is explicitly and implicitly understood by a person skilled in the art that the embodiments described herein may be combined with other embodiments.

In the description of the embodiments of the present application, the term "and/or" is only an association relationship for describing associated objects, indicating that three relationships may exist, for example, A and/or B, and the term may indicate three cases: A exists separately, A and B exist simultaneously, and B exists separately. In addition, the character "/" in the description generally indicates that the associated objects are in an "or" relationship.

In the description of the embodiments of the present application, the term "a plurality of" refers to two or more (including two), and by the same reasoning, "a plurality of groups" refers to two or more groups (including two), and "a plurality of pieces" refers to two or more pieces (including two pieces).

In the embodiments of the present application, if not specified, water can be at least one of distilled water, deionized water, pure water, and ultrapure water; and the solvent used in the "solution" or "aqueous solution" is at least one selected from distilled water, deionized water, pure water, and ultrapure water.

A person skilled in the art may understand the specific meanings of the terms above in the embodiments of the present application according to specific situations. In order to solve the problem in the prior art that when lithium iron phosphate is prepared, plenty of energy needs to be consumed to sand iron phosphate particles to nanoscale, the present application provides an iron phosphate material and a preparation method therefor, a cathode material, a cathode sheet, a secondary battery, and an electric device, wherein the iron phosphate material is a small-sized iron phosphate particle material having a ring structure and a D50 particle size of less than 1 µm. When used as a precursor to prepare lithium iron phosphate, a nanoscale iron phosphate material can be easily obtained, the energy consumption required for nanominiaturization can be reduced, and an iron phosphate material having a smaller particle size can be easily obtained, thereby making it easier to improve the conductivity of the prepared lithium iron phosphate material. As a result, the energy consumption and costs in the preparation processes of the cathode sheet, secondary battery and electrical device are also reduced, and the electrochemical properties are improved.

The electric device provided in the embodiments of the present application may be, but is not limited to, a mobile phone, a tablet computer, a notebook computer, an electric toy, an electric tool, an electromobile, an electric automobile, a ship, a spacecraft, etc. The electric toy may include fixed or mobile electric toys, such as game consoles, electric car toys, electric ship toys, electric airplane toys, etc. The spacecraft may include airplanes, rockets, space shuttles, spacecraft, etc.

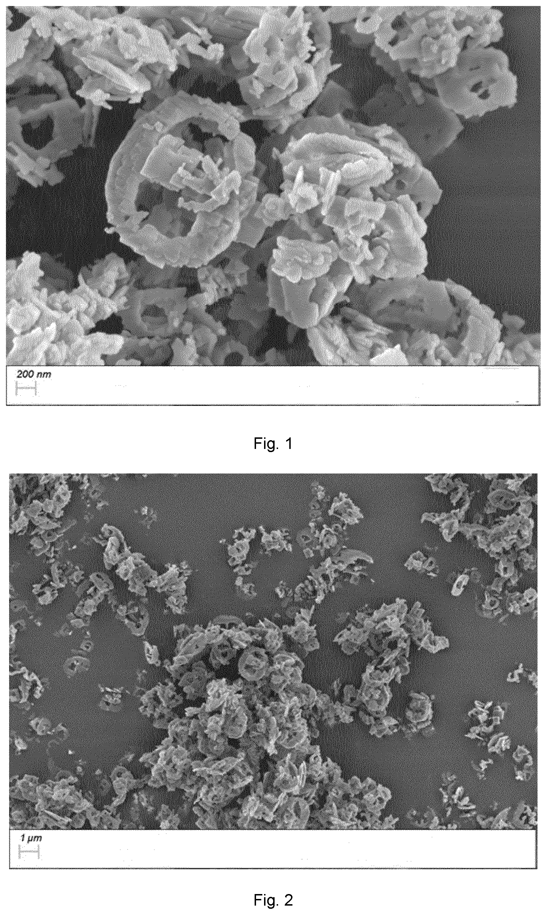

With reference to Figs. 1 and 2, in a first aspect, an embodiment of the present application provide an iron phosphate material, the iron phosphate material comprises iron phosphate particles, at least one of the iron phosphate particles has a ring structure, and the D50 particle size of the iron phosphate particles is less than 1 µm. The D50 particle size of the iron phosphate particles may specifically be 10 nm, 50 nm, 100 nm, 200 nm, 300 nm, 400 nm, 500 nm, 600 nm, 700 nm, 800 nm, or 900 nm, and certainly may also be other values within the foregoing range, and is preferably in the range of 750 nm-860 nm. The iron phosphate material uses the small-sized iron phosphate particle material having a ring structure and a D50 particle size of less than 1 µm. When the iron phosphate material is used as a precursor to prepare lithium iron phosphate, the energy consumption required for nanominiaturization is reduced, and an iron phosphate material with smaller particle size can be easily obtained, thereby making it easier to improve the conductivity of the prepared lithium iron phosphate materials.

Further, in some embodiments, a particle size aggregation index of the iron phosphate particles satisfies: 0.5 ≤ (D90-D10)/D50 ≤ 2, and preferably 1.25 ≤(D90-D10)/D50 ≤ 1.81.

In the technical solutions of the embodiments of the present application, the particle size distribution of the iron phosphate particles is more concentrated, which is conducive to improving the grinding efficiency and obtaining nanoscale iron phosphate particles with uniform size by sanding, so that in the subsequent preparation process of lithium iron phosphate, lithium ions can be evenly distributed in the iron phosphate particles, and lithium iron phosphate with high conductivity and excellent electrochemical properties can be obtained.

Further, in some embodiments, the ratio of the average inner diameter to the average outer diameter of the ring structure of an iron phosphate particle is among (0.35-0.48):1, and preferably, the ratio is among (0.36-0.43):1.

In the technical solutions of the embodiments of the present application, ring diameters (the distance between the outer diameter and the inner diameter of the circular ring) of iron phosphate particles influences the grinding efficiency and morphology of the grinding particles. Iron phosphate particles with excessively large ring diameters are not conducive to improving the grinding efficiency, and iron phosphate particles with excessively small ring diameters tend to generate irregular fractures during grinding. The iron phosphate particles within the size range above are conducive to improving the grinding efficiency and obtaining nanoscale iron phosphate particles with small sizes which have regular morphologies and uniform sizes, so that lithium ions are evenly distributed in the iron phosphate particles in the subsequent preparation process for lithium iron phosphate.

It should be noted that, in the technical solutions of the embodiments of the present application, the inner diameter of the ring structure of an iron phosphate particle refers to a distance between two points farthest away from each other in the intersecting part of a straight line passing through the center of the ring structure of the iron phosphate particle along the radial direction of the iron phosphate particle, and the outer diameter of the ring structure of the iron phosphate particle means a distance between two points closest to each other in the intersecting part of a straight line passing through the center of the ring structure of the iron phosphate particle along the radial direction of the iron phosphate particle.

Preferably, in some embodiments, the average internal diameter of the ring structure of aniron phosphate particle is in the range of 178 nm-559 nm, and the average outer diameter of the ring structure of an iron phosphate particles is in the range of 474.60 nm-1188.90 nm; and preferably, the average inner diameter of the ring structure of the iron phosphate particles is in the range of 240 nm-371 nm, and the average outer diameter of the ring structure of the iron phosphate particles is in the range of 614 nm-901 nm.

In the technical solutions of the embodiments of the present application, the iron phosphate particles within the size range above are conducive to improving the grinding efficiency and obtaining nanoscale iron phosphate particles with regular morphologies and uniform sizes.

Further, in some embodiments, the specific surface area of the iron phosphate material is 13 m²/g-20 m²/g, and preferably 13 m²/g-17 m²/g.

In the technical solutions of the embodiments of the present application, in the process of preparing lithium iron phosphate, the iron phosphate with larger specific surface area of the iron phosphate particles are conducive to the uniform mixing of the raw materials in the preparation process of lithium iron phosphate, and is conducive to the uniform distribution of lithium ions in the iron phosphate particlesl, and is also conducive to improving the lithium ion deintercalation efficiency and improving the rate performance and specific capacity of lithium iron phosphate. In the present application, the specific surface area of the iron phosphate material is controlled to be within the described range, which facilitates grinding to obtain nanoscale iron phosphate particles with high specific surface areas, thereby preparing a lithium iron phosphate material having high rate performance and a high specific capacity.

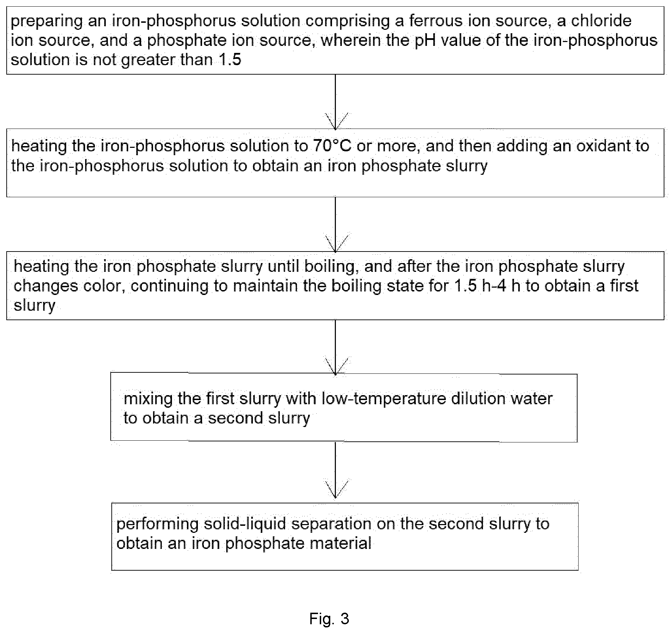

As shown in Fig. 3, in a second aspect, an embodiment of the present application provides a preparation method for an iron phosphate material, comprising the following steps:
preparing an iron-phosphorus solution comprising a ferrous ion source, a chloride ion source, and a phosphate ion source, the pH value of the iron-phosphorus solution being not greater than 1.5;
heating the iron-phosphorus solution to 70°C or more, and then adding an oxidant to the iron-phosphorus solution to obtain an iron phosphate slurry;
heating the iron phosphate slurry until boiling, and after the iron phosphate slurry changes color, continuing to maintain the boiling state for 1.5 h-4 h to obtain a first slurry;
mixing the first slurry with low temperature dilution water to obtain a second slurry; and
performing solid-liquid separation on the second slurry to obtain an iron phosphate material.

In the technical solutions of the embodiments of the present application, the system for preparing the iron phosphate material uses a chlorine ion system, the pH value of the iron-phosphorus solution is controlled to inhibit the electrolysis of ferrous ions and reduce the agglomeration of subsequently generated iron phosphate ions, the temperature of the ion-phosphorus solution is controlled and an oxidation treatment is performed on ferrous ions to obtain an iron phosphate-containing slurry, then the iron phosphate-containing slurry is heated until boiling, an iron phosphate-hydrochloric acid complex is formed from iron phosphate particles in the iron phosphate-containing slurry with hydrochloric acid by means of the volatility and complexibility of hydrogen chloride, then low-temperature dilution water is added to the first slurry, and decomplexation is achieved by dilution-cold excitation, so as to finally prepare iron phosphate particles having D50 particle sizes less than 1 µm and having ring structures, and thus it is easier to obtain a nanoscale iron phosphate material. Using the iron phosphate material as a precursor to prepare lithium iron phosphate is conducive to reducing the energy consumption required for nanominiaturization and obtaining an iron phosphate material having a smaller particle size, thereby making it easier to improve the conductivity of the prepared lithium iron phosphate material. By forming an iron phosphate-hydrochloric acid complex under high temperature conditions, protecting the iron phosphate in the form of a complex to avoid particle agglomeration, then decomplexing the iron phosphate-hydrochloric acid-containing slurry under low temperature conditions by dilution-cold excitation decomplexation, and further refining the iron phosphate particles by the principle of cold quenching to generate small-sized iron phosphate particles, a nanoscale iron phosphate material can be easily obtained, the energy consumption required for nanominiaturization can be reduced, and an iron phosphate material with smaller particle sizes can be easily obtained, and thus the conductivity of the lithium iron phosphate material prepared from the iron phosphate particles is improved. In addition, the high-temperature boiling method is conducive to the full complexation of iron phosphate particles to form an iron phosphate-hydrochloric acid complex, and the free hydrochloric acid in the reaction system is evaporated to reduce the acidity, thereby facilitating the subsequent acquisition of small-sized and high-yield iron phosphate, while realizing the recovery of free hydrochloric acid. The preparation method in the present application can be used to prepare the iron phosphate material as described above, the yield of the preparation of the iron phosphate material is high, and the recovery of free hydrochloric acid can be realized.

Further, in some embodiments, the molar ratio of iron element, phosphorus element, and chlorine element in the iron-phosphorus solution is (0.8-1.2):(0.8-2):(0.5-3).

In the technical solutions of the embodiments of the present application, the iron element, phosphorus element and chlorine element in the system affect the yield, sizes and morphologes of the generated iron phosphate. For example, a higher iron-chloride ratio and phosphorus-chloride ratio favor precipitation of iron phosphate to obtain a higher iron phosphate yield. A smaller phosphorus-chloride ratio facilitates the formation of an iron phosphate-hydrochloric acid complex in a boiling stage at a high temperature, thereby reducing agglomeration of iron phosphate, so as to obtain an iron phosphate material having a relatively small size and good dispersibility. By controlling iron element, phosphorus element, and chlorine element with the described ratio , an iron phosphate material comprising of iron phosphate particles with ring structures and D50 particle sizes of less than 1 µm can be obtained at a high yield.

In some embodiments, the molar ratio of iron element, phosphorus element and chlorine element in the iron-phosphorus solution is 1:(1-1.2):(2-3).

In the technical solutions of the embodiments of the present application, controlling the iron element, the phosphorus element and the chlorine element in the described range is conducive to sufficient precipitation of the iron element to form iron phosphate to obtain a higher yield, and the obtained iron phosphate material has a regular morphology and good particle dispersion.

In some embodiments, the oxidant is an aqueous solution of hydrogen peroxide, the molar ratio of hydrogen peroxide in the aqueous solution of hydrogen peroxide to the iron element in the iron-phosphorus solution is (0.6-1):1, and the concentration of the iron element in the iron-phosphorus solution is 0.5 mol/L-2.0 mol/L.

In the technical solutions of the embodiments of the present application, the ratio of hydrogen peroxide to the iron element in the iron-phosphorus solution and the concentration of the iron element affect the oxidation rate of ferrous ions, and thus affect the generation rate of the iron phosphate crystal nuclei and the growth rate of the crystal. Under the conditions above, it is beneficial to obtain an iron phosphate slurry having smaller iron phosphate particles, to generate more iron phosphate-hydrochloric acid complexes in the subsequent high-temperature boiling stage, to stably and evenly disperse the iron phosphate-hydrochloric acid complex in the first slurry, and to reduce the agglomeration of iron phosphate particles, thereby generating a small-sized iron phosphate material having good particle dispersion in the subsequent dilution-cold excitation decomplexation stage.

In some embodiments, the aqueous solution of hydrogen peroxide is added to the iron-phosphorus solution by means of dropwise addition, the time for the dropwise addition is 5 min-15 min, and after the dropwise addition is completed, stirring is performed for 5 min-15 min, so as to obtain an iron phosphate slurry.

In the technical solutions of the embodiments of the present application, the dropwise addition speed and stirring time of hydrogen peroxide affect the generation of iron phosphate crystal nuclei and the growth of the crystal. Under the conditions above, it is beneficial to rapidly generate iron phosphate crystal nuclei and suppress crystal growth, so as to generate an iron phosphate slurry of iron phosphate particles having a relatively small size, so that an iron phosphate-hydrochloric acid complexes is produced in a subsequent high-temperature boiling stage in a large quantity, and iron phosphate-hydrochloric acid complex is advantageously stably and uniformly dispersed in the first slurry to reduce the agglomeration of the iron phosphate particles, and thus an iron phosphate material having a small size and good particle dispersibility in a subsequent dilution-cold excitation decomplexation stage can be generated.

In some embodiments, the iron-phosphorous solution is heated to 70°C-80°C, and then an aqueous solution of hydrogen peroxide is added to the iron-phosphorous solution.

In the technical solutions of the embodiments of the present application, using an aqueous solution of hydrogen peroxide and controlling the temperature of the iron-phosphorus solution to 70°C-80°C are conducive to the full reaction of hydrogen peroxide with the iron-phosphorus solution, improving the oxidation efficiency of ferrous ions, facilitating the rapid generation of a large number of iron phosphate particles with small sizes at this stage, facilitating the generation of more iron phosphate-hydrochloric acid complexes in the subsequent high-temperature boiling stage, and facilitating the stable and uniform dispersion of the iron phosphate-hydrochloric acid complexes in the first slurry, thereby preparing an iron phosphate material having a small size and good particle dispersibility.

In some embodiments, the mass fraction of hydrogen peroxide in the aqueous solution of hydrogen peroxide is 20%-30%.

In the technical solutions of the embodiments of the present application, hydrogen peroxide within the range above facilitates rapid generation of iron phosphate particles, and can effectively reduce the decomposition loss of hydrogen peroxide during the oxidation process of ferrous ions.

In some embodiments, the ferrous ion source is one or more selected from ferrous nitrate and ferrous chloride.

In the technical solutions of the embodiments of the present application, the described ferrous ion source can provide necessary ferrous ions for the system of iron-phosphorus solution reaction. When ferrous nitrate is used as a ferrous salt, free nitrate ions in the system can form nitric acid in the subsequent boiling process and nitric acid can be removed by volatilization. When ferrous chloride is used as a ferrous salt, free chlorine ions in the system can be volatilized and removed in the form of hydrochloric acid in the subsequent boiling process. Therefore, the acidity of the system can be lowered, and impurities can be removed, which is conducive to the subsequent acquisition of small-sized and high-yield iron phosphate.

In some embodiments, the ferrous ion source is ferrous chloride.

In the technical solutions of the embodiments of the present application, ferrous chloride introduces chloride ions while providing ferrous ions, and chloride ions subsequently complex with iron phosphate particles to form an iron phosphate-hydrochloric acid complexes, thereby reducing the agglomeration of iron phosphate, and at the same time, avoiding the introduction of impurities such as nitrogen and oxygen.

In some embodiments, the chloride ion source is selected from at least one of hydrochloric acid and ferrous chloride.

In the technical solutions of the embodiments of the present application, both hydrochloric acid and ferrous chloride can provide chlorine ions required for the reaction, and reduce the introduction of other impurity cations.

In some embodiments, the phosphate ion source is selected from at least one of H₃PO₄, (NH₄)H₂PO₄, and (NH₄)₂HPO₄.

In the technical solutions of the embodiments of the present application, H₃PO₄, (NH₄)H₂PO₄, and (NH₄)₂HPO₄ can provide phosphate ions necessary for the reaction.

In some embodiments, the preparation steps for the iron-phosphorus solution are as follows:
mixing a ferrous ion source, a chloride ion source, a phosphate ion source, and water, and controlling the pH value of the mixing system to be not greater than 1.5, so as to obtain an iron-phosphorus solution.

In this embodiment, the required iron-phosphorus solution can be obtained by directly mixing the ferrous ion source, the chloride ion source, and the phosphate ion source with water, and the process is simple.

In some embodiments, the ferrous ion source is ferrous chloride, and the chloride ion source is selected from ferrous chloride and hydrochloric acid, and the phosphate ion source is phosphoric acid.

In the technical solutions of the embodiments of the present application, ferrous chloride is used as both a ferrous ion source and a chloride ion source, hydrochloric acid is used as a chloride ion source and provides acidity conditions for the reaction, and phosphate is used as a phosphorus source and can provide acidity conditions for the reaction. The pH value of the system and the elemental ratio of ferrous ions, phosphate ions and chloride ions can be controlled by the ratio of the described raw materials, no additional acid or alkali (such as sulfuric acid, nitric acid, sodium hydroxide, and ammonia) needs to be added to prepare an iron phosphate material comprising of iron phosphate particles with ring structures and smaller sizes, and the introduction of impurity ions (such as sulfate, nitrate, sodium, and NH₄) can be minimized to prepare a high-purity iron phosphate material. As a result, the cycle life and the capacity retention rate of lithium iron phosphate which is prepared by using this iron phosphate material as a raw material can be improved.

In some embodiments, the preparation steps for the iron-phosphorus solution are as follows:
heating a dilute aqueous hydrochloric acid solution to 50°C-70°C, then adding an elemental iron material, and reacting to obtain a ferrous chloride solution, wherein the dilute aqueous hydrochloric acid solution has a concentration of 1.0 mol/L-4.0 mol/L;
adding phosphoric acid and water to the ferrous chloride solution, mixing, and controlling the pH value to be not more than 1.5, so as to obtain the iron-phosphorus solution.

In the technical solutions of the embodiments of the present application, by using the elemental iron material, the aqueous hydrochloric acid solution, and phosphoric acid as raw materials to prepare the iron-phosphorus solution, the introduction of impurity ions can be minimized, and a high-purity iron phosphate material can be prepared. Specifically, phosphoric acid and water can be added to the ferrous chloride solution in the form of an aqueous phosphoric acid solution, and can also be separately added to the ferrous chloride solution. Specifically, in some embodiments, the elemental iron material is one or more selected from iron sheets, iron powder, and iron blocks.

Further, in some embodiments, the pH of the iron-phosphorous solution is 0.2-1.5.

In the technical solutions of the embodiments of the present application, the pH value of the iron-phosphorous solution influences the generation rate and yield of iron phosphate. A relatively high pH value easily causes agglomeration of plenty of iron phosphate particles during the oxidation stage. A relatively low pH value is adverse to precipitation of iron phosphate of a target product. The pH value range above is more conducive to obtaining a high yield and a smaller size of iron phosphate material.

In some embodiments, the temperature difference between the second slurry and the first slurry is no less than 60°C.

In the technical solutions of the embodiments of the present application, a higher temperature difference is more conducive to the decomplexation and cold quenching refinement of iron phosphate-hydrochloric acid, thereby generating a smaller size of iron phosphate material.

In some embodiments, the difference between the temperature of the second slurry and the temperature of the first slurry is 70°C-90°C.

In the technical solutions of the embodiments of the present application, the difference between the temperature of the second slurry and the temperature of the first slurry is controlled within the temperature range, which is more conducive to obtaining a smaller-sized iron phosphate material and obtaining a higher yield.

In some embodiments, the mass ratio of the first slurry to the low temperature dilution water is 1:(10-20).

In the technical solutions of the embodiments of the present application, the low-temperature dilution water is used for quick cooling and dilution of a system, thereby facilitating the decomplexation of an iron phosphate-hydrochloric acid complex to generate an iron phosphate material. The mass ratio of the first slurry to the low-temperature dilution water is in the described range, which is conducive to the rapid and full decomplexation of the iron phosphate-hydrochloric acid complex, thereby obtaining a small-sized iron phosphate material having a higher purity and higher yield.

In some embodiments, after mixing the first slurry with the low temperature dilution water, stirring is performed until the color changes, so as to obtain a second slurry.

In the technical solutions of the embodiments of the present application, in the process of high-temperature boiling treatment, an iron phosphate-hydrochloric acid complex is generated; and after adding low-temperature dilution water and mixing, iron phosphate is decomplexed and is precipitated, and the color of the slurry changes. Specifically, the color of iron phosphate is an off white or light red powder, and the iron phosphate slurry containing iron phosphate particles obtained by oxidation with an oxidant exhibits brown-yellow color, the brown-yellow iron phosphate slurry has no obvious iron phosphate precipitation after high-temperature boiling (deacidification) treatment, and the slurry color is bright yellow, indicating that an iron phosphate-hydrochloric acid complex (e.g. [FeCl₄]⁻ complex) is generated during the high-temperature boiling treatment. After adding low-temperature dilution water and mixing, iron phosphate is decomplexed and precipitated, and the slurry color changes from bright yellow to light white.

In some embodiments, solid-liquid separation is performed on the second slurry, and the obtained solid is washed and then dried at 90°C-120°C, so as to obtain the iron phosphate material.

In the technical solutions of the embodiments of the present application, under the described conditions, water can be rapidly removed to obtain the iron phosphate material.

In a third aspect, an embodiment of the present application provides a cathode material, comprising at least one of a lithium iron phosphate material and a lithium iron manganese phosphate material. The lithium iron phosphate material is prepared from the foregoing iron phosphate material or prepared from the iron phosphate material prepared by the foregoing preparation method for an iron phosphate material, and the lithium iron manganese phosphate material is prepared from the foregoing iron phosphate material or prepared from the iron phosphate material prepared from the foregoing preparation method for an iron phosphate material.

In a fourth aspect, an embodiment of the present application provides a cathode sheet, wherein the cathode sheet comprises the cathode material above. The cathode sheet comprises the cathode material above, and thus has the advantages of reducing the manufacturing energy consumption and costs of the cathode sheet.

In a fifth aspect, an embodiment of the present application provides a secondary battery, wherein the electrode sheet used in the cathode is the cathode sheet above. The secondary battery comprises the cathode sheet above, and thus has the advantages of reducing manufacturing energy consumption and costs in preparation of the secondary battery and improving electrochemical properties of the secondary battery.

In a sixth aspect, an embodiment of the present application provides an electric device, such as a vehicle, comprising the battery according to the foregoing embodiment. The electric device comprises the secondary battery above, and thus has the advantages of reducing manufacturing energy consumption and costs of the electric device and improving the electrochemical properties of the electric device.

Some specific embodiments are listed below. It should be noted that the embodiments described below are exemplary, and are only used to explain the present application, and cannot be construed as limitations to the present application. If no specific techniques or conditions are specified in the examples, the methods or conditions described in the literature in the art or in the product instructions shall be followed. The reagents or instruments used without indicating the manufacturer are all conventional products that can be purchased from the market.

### I. Preparation method

### Example 1

Step 1, preparation of ferrous chloride: concentrated hydrochloric acid was taken, purified water was added to formulate a hydrochloric acid solution with a chloride ion concentration of 4.0 mol/L for use, the dilute hydrochloric acid solution was heated to 60°C, after reaching the temperature, iron powder was added to the dilute hydrochloric acid solution (wherein the iron powder was added according to a molar ratio of the Fe element to the Cl element of 1:2), and reacted until no bubbles were produced, and filtering was performed to obtain a ferrous chloride solution.

Step 2, preparation of an iron phosphate solution: the prepared ferrous chloride solution was taken, phosphoric acid and pure water were added for mixing to formulate an iron-phosphorus solution with the concentration of ferrous ions being 1.5 mol/L (wherein phosphoric acid was added according to a molar ratio of the Fe element to the P element of 1:1), and the iron-phosphorus solution was stirred evenly to obtain an iron-phosphorus solution having a pH value of 0.80.

Step 3, preparation of an iron phosphate slurry: the iron phosphate solution formulated in Step 2 was used as a base solution, the base solution was heated to 80°C, after reaching the temperature, a aqueous solution of hydrogen peroxide (in the aqueous solution of hydrogen peroxide, the mass fraction of hydrogen peroxide was 28%, and the aqueous solution of hydrogen peroxide was added according to a molar ratio of H₂O₂ to the Fe element of 1.5:2.0) was dropwise added into the base solution, the dropwise addition time being controlled at 10 min, and stirring was continued for 10 min after the dropwise addition was completed, so as to obtain an iron phosphate slurry.

Step 4: the iron phosphate slurry prepared in Step 3 was heated until boiling, and after the color of the iron phosphate slurry changed from brown-yellow color to bright-yellow color gradually, the boiling state was maintained for 2h, so as to obtain a first slurry.

Step 5: the first slurry prepared in Step 4 was added to low-temperature dilution water, and stirred until the color of the slurry changed from bright yellow to light white to obtain a second slurry (wherein, the temperature of the second slurry was 20°C, and the mass ratio of the first slurry to the low-temperature dilution water was 1:12).

Step 6: the second slurry prepared in step 5 was filtered, the solid obtained by filtering was washed in a counter current until the conductivity of the washing water after washing is less than 500 us/cm to obtain an iron phosphate filter cake, and the filter cake was dried at 98°C to obtain iron phosphate.

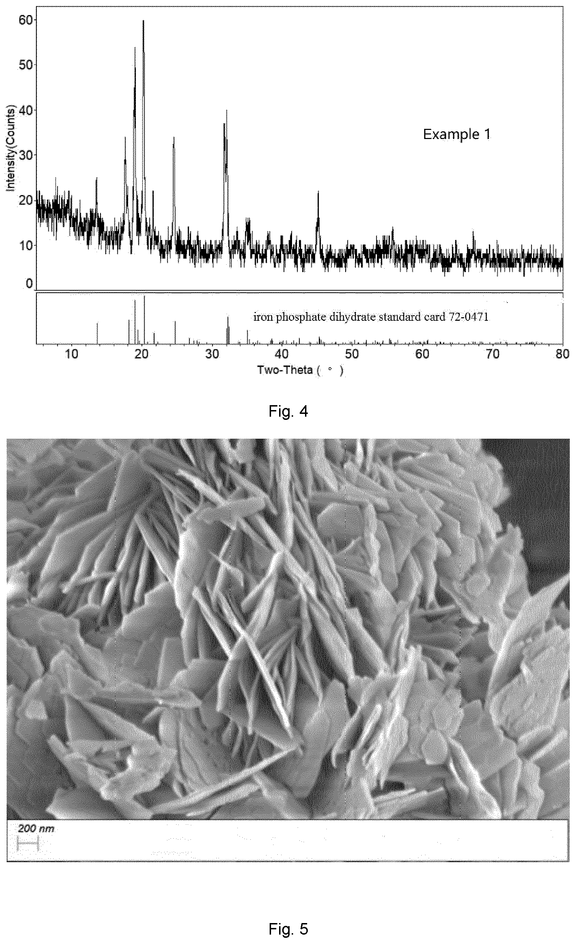

The SEM results of the iron phosphate material prepared in Example 1 were shown in Figs. 1 and 2. The microscopic structure of the iron phosphate material was annular, and the particles had better dispersion. The XRD results of the iron phosphate material were shown in Fig. 4. The prepared small-sized iron phosphate particles with a ring structure was a single iron phosphate phase. According to the particle size detection data, it can be determined that the D50 particle size of the iron phosphate material was 0.82 µm, and the D100 particle size was only 3.846 µm. In the example of the present application, a small-sized iron phosphate material with a D50 particle size of less than 1 µm and having a ring structure was prepared.

### Example 2

Step 1, preparation of ferrous chloride: concentrated hydrochloric acid was taken, purified water was added to formulate a hydrochloric acid solution having a chloride ion concentration of 4.0 mol/L for use, a dilute hydrochloric acid solution was heated to 50°C, after reaching the temperature, iron powder (wherein the iron powder was added according to a molar ratio of the Fe element to the Cl element of 1:2) was added to the dilute hydrochloric acid solution and reacted until no bubbles were produced, and filtering was performed to obtain an ferrous chloride solution.

Step 2, preparation of an iron-phosphorus solution: the prepared ferrous chloride solution was taken, phosphoric acid and pure water were added for mixing to formulate an iron-phosphorus solution having a ferrous ion concentration of 0.5 mol/L (wherein phosphoric acid was added according to a molar ratio of the Fe element to the P element of 1.0:1), and the iron-phosphorus solution was stirred evenly to obtain an iron phosphate solution, and the pH value of the iron phosphate solution was 1.2.

Step 3, preparation of an iron phosphate slurry: the iron phosphate solution formulated in Step 2 was used as a base solution, the base solution was heated to 70°C, after reaching the temperature, a aqueous solution of hydrogen peroxide (in the aqueous solution of hydrogen peroxide solution, the mass fraction of hydrogen peroxide was 20%, and the aqueous solution of hydrogen peroxide was added at a molar ratio of H₂O₂ to the Fe element of 0.6:1) was dropwise added into the base solution, the dropwise addition time being controlled to 5 min, and after the dropwise addition was completed, stirring was performed for 5 min, so as to obtain an iron phosphate slurry.

Step 4: the iron phosphate slurry prepared in step 3 was heated until boiling, and after the color of the iron phosphate slurry changed from brown-yellow color to bright-yellow color gradually, the boiling state was maintained for 1.5 h, so as to obtain a first slurry.

Step 5: the first slurry prepared in Step 4 was added to low-temperature dilution water, and was stirred until the color of the slurry changed from bright yellow to light white, so as to obtain a second slurry (wherein the temperature of the second slurry was 10°C, and the mass ratio of the first slurry to the low-temperature dilution water was 1:30).

Step 6: the second slurry prepared in step 5 was prepared, the solid obtained by filtering was washed in a counter current until the conductivity of the washing water after washing was less than 500 us/cm to obtain an iron phosphate filter cake, and the filter cake was dried at a condition of 90°C, so as to obtain iron phosphate.

### Example 3

Step 1, preparation of ferrous chloride: concentrated hydrochloric acid was taken, purified water was added to formulate a hydrochloric acid solution having a chloride ion concentration of 4.0 mol/L for use, the dilute hydrochloric acid solution was heated to 70°C, after reaching the temperature, iron powder was added to the dilute hydrochloric acid solution (wherein the iron powder was added according to a molar ratio of the Fe element to the Cl element of 1:2) and reacted until no bubbles were produced, and filtering was performed to obtain an ferrous chloride solution.

Step 2, preparation of an iron-phosphorus solution: the prepared ferrous chloride solution was taken, phosphoric acid and pure water were added for mixing to formulate an iron-phosphorus solution having a ferrous ion concentration of 2 mol/L (wherein phosphoric acid was added according to a molar ratio of the Fe element to the P element of 1:1), and the iron-phosphorus solution was stirred evenly to obtain an iron-phosphorus solution, wherein the pH value of the iron-phosphorus solution was 0.6.

Step 3, preparation of an iron phosphate slurry: the iron phosphate solution formulated in Step 2 was used as a base solution, the base solution was heated to 80°C, after reaching the temperature, a aqueous solution of hydrogen peroxide (in the aqueous solution of hydrogen peroxide, the mass fraction of hydrogen peroxide was 28%, and the aqueous solution of hydrogen peroxide was added according to a molar ratio of H₂O₂ to the Fe element of 1:1) was dropwise added to the base solution, the dropwise addition time being controlled to 15 min, and after the dropwise addition was completed, stirring was continued for 15 min so as to obtain an iron phosphate slurry.

Step 4: the iron phosphate slurry prepared in step 3 was heated until boiling, and after the color of the iron phosphate slurry changed from brown-yellow color to bright-yellow color gradually, the boiling state was maintained for 4h to obtain a first slurry.

Step 5: the first slurry prepared in Step 4 was added to low-temperature dilution water, and was stirred until the color of the slurry changed from bright yellow to light white to obtain a second slurry (wherein the temperature of the second slurry was 30°C, and the mass ratio of the first slurry to the low-temperature dilution water was 1:10).

Step 6: the second slurry prepared in step 5 was filtered, the solid obtained by filtering was washed in a counter current until the conductivity of the washing water after washing was less than 500 us/cm to obtain an iron phosphate filter cake, and the filter cake was dried at a condition of 120°C, so as to obtain iron phosphate.

### Example 4

Step 1, preparation of an iron-phosphorus solution: ferrous chloride, hydrochloric acid, H₃PO₄ and pure water were mixed to obtain an iron-phosphorus solution having a ferrous ion concentration of 1.5 mol/L (wherein, ferrous chloride, H₃PO₄ and hydrochloric acid were added according to a molar ratio of the Fe element, P element and Cl element of 1:1:3), and were stirred evenly to obtain an iron-phosphorus solution, wherein the pH value of the iron-phosphorus solution was 0.3.

Step 2: preparation of an iron phosphate slurry: the iron-phosphorus solution formulated in Step 1 was used as a base solution, the base solution was heated to 80°C, after reaching the temperature, a hydrogen peroxide solution (in the hydrogen peroxide solution, the mass fraction of hydrogen peroxide was 28%, and the hydrogen peroxide solution was added according to a molar ratio of H₂O₂ to the Fe element of 1.5:2.0) was dropwise added into the base solution, the dropwise addition time being controlled at 10 min, and after the dropwise addition was completed, stirring was continued for 10 min so as to obtain an iron phosphate slurry.

Step 3: the iron phosphate slurry prepared in step 2 was heated until boiling, and after the color of the iron phosphate slurry changed from brown-yellow color to bright-yellow color gradually, the boiling state was maintained for 2h, so as to obtain a first slurry.

Step 4: the first slurry prepared in Step 3 was added to low-temperature dilution water, and was stirred until the color of the slurry changed from bright yellow to light white to obtain a second slurry (wherein, the temperature of the second slurry was 20°C, and the mass ratio of the first slurry to the low-temperature dilution water was 1:12).

Step 5: the second slurry prepared in step 4 was filtered, the solid obtained by filtering was washed in a counter current until the conductivity of the washing water after washing was less than 500 us/cm to obtain an iron phosphate filter cake, and the filter cake was dried at 98°C, so as to obtain iron phosphate.

### Example 5

Step 1, preparation of an iron-phosphorus solution: ferrous nitrate, hydrochloric acid, (NH₄)H₂PO₄, and pure water were mixed to obtain an iron-phosphorus solution having a ferrous ion concentration of 1.5 mol/L (wherein, ferrous nitrate, hydrochloric acid, and (NH₄)H₂PO₄ were added at a molar ratio of the Fe element, P element, and Cl element of 1:1:3), and the iron-phosphorus solution was stirred evenly to obtain an iron-phosphorus solution, wherein the pH value of the iron-phosphorus solution was 0.2.

Step 2: preparation of an iron phosphate slurry: the iron phosphate solution formulated in Step 1 was used as a base solution, the base solution was heated to 70°C, after reaching the temperature, a hydrogen peroxide solution (in the hydrogen peroxide solution, the mass fraction of hydrogen peroxide was 20%, and the hydrogen peroxide solution was added at a molar ratio of H₂O₂ to the Fe element of 0.6:1) was dropwise added into the base solution, the addition time being controlled to 5 min, and stirring was continued for 5 min after the dropwise addition was completed, so as to obtain an iron phosphate slurry.

Step 3: the iron phosphate slurry prepared in step 2 was heated until boiling, and after the color of the iron phosphate slurry changed from brown-yellow color to bright-yellow color gradually, the boiling state was maintained for 1.5 h to obtain a first slurry.

Step 4: the first slurry prepared in step 3 was added to low-temperature dilution water, and was stirred until the color of the slurry changed from bright yellow to light white to obtain a second slurry (wherein the temperature of the second slurry was 10°C, and the mass ratio of the first slurry to the low-temperature dilution water was 1:30).

Step 5: the second slurry prepared in step 4 was filtered, the solid obtained by filtering was washed in a counter current until the conductivity of the washing water after washing was less than 500 us/cm to obtain an iron phosphate filter cake, and the filter cake was dried at a condition of 90°C, so as to obtain iron phosphate.

### Example 6

Step 1, preparation of an iron-phosphorus solution: ferrous nitrate, hydrochloric acid and (NH₄)₂HPO₄, and pure water were mixed to obtain an iron-phosphorus solution having a ferrous ion concentration of 2 mol/L (wherein, ferrous nitrate, hydrochloric acid, and (NH₄)₂HPO₄ were added according to a molar ratio of the Fe element, P element and Cl element of 1.0:1.2:3), and were stirred evenly to obtain an iron-phosphorus solution, wherein the pH value of the iron-phosphorus solution was 0.4.

Step 2: preparation of an iron phosphate slurry: the iron-phosphorus solution formulated in Step 1 was used as a base solution, the base solution was heated to 80°C, after reaching the temperature, a hydrogen peroxide solution (in the hydrogen peroxide solution, the mass fraction of hydrogen peroxide was 28%, and the hydrogen peroxide solution was added according to a molar ratio of H₂O₂ to the Fe element of 1:1) was dropwise added into the base solution, the dropwise addition time being controlled to 15 min, and stirring was continued for 15 min after the dropwise addition was completed, so as to obtain an iron phosphate slurry.

Step 3: the iron phosphate slurry prepared in step 2 was heated until boiling, and after the color of the iron phosphate slurry changed from brown-yellow color to bright-yellow color gradually, the boiling state was maintained for 4 h, so as to obtain a first slurry.

Step 4: the first slurry prepared in step 3 was added to low-temperature dilution water, and was stirred until the color of the slurry changed from bright yellow to light white to obtain a second slurry (wherein the temperature of the second slurry was 30°C, and the mass ratio of the first slurry to the low-temperature dilution water was 1:10).

Step 5: the second slurry prepared in step 4 was filtered, the solid obtained by filtering was washed in a counter current until the conductivity of the washing water after washing was less than 500 us/cm to obtain an iron phosphate filter cake, and the filter cake was dried at a condition of 120°C, so as to obtain iron phosphate.

### Example 7

This example differs from Example 4 only in that, in Step 1, ferrous chloride was replaced with ferrous nitrate.

### Example 8

This example differs from Example 4 only in that, in Step 1, ferrous chloride was replaced with ferrous nitrate, and ferric nitrate, H₃PO₄, and hydrochloric acid were added in a molar ratio of the Fe element, P element, and Cl element of 1:1:2. Step 1 was specifically as follows:

Step 1, preparation of an iron-phosphorus solution: ferrous nitrate, hydrochloric acid, H₃PO₄, and pure water were mixed to obtain an iron-phosphorus solution having a ferrous ion concentration of 1.5 mol/L (wherein ferrous nitrate, H₃PO₄, and hydrochloric acid were added according to a molar ratio of the Fe element, P element and Cl element of 1:1:2), and were stirred evenly to obtain an iron-phosphorus solution, wherein the pH value of the iron-phosphorus solution was 0.45.

### Example 9

This example differs from Example 4 only in that, in Step 1, ferrous chloride was replaced with ferrous nitrate, and ferric nitrate, H₃PO₄, and hydrochloric acid were added according to a molar ratio of the Fe element, P element, and Cl element of 1:1:0.5. Step 1 was specifically as follows:
Step 1, preparation of an iron-phosphorus solution: ferrous nitrate, hydrochloric acid, H₃PO₄, and pure water were mixed to obtain an iron-phosphorus solution having a ferrous ion concentration of 1.5 mol/L (wherein ferrous nitrate, H₃PO₄, and hydrochloric acid were added according to a molar ratio of the Fe element, P element and Cl element of 1:1:0.5), and were stirred evenly to obtain an iron-phosphorus solution having a pH value of 0.55.

### Example 10

This example differs from Example 4 only in that, in Step 1, ferrous chloride was replaced with ferrous nitrate, and ferric nitrate, H₃PO₄, and hydrochloric acid were added in a molar ratio of the Fe element, P element, and Cl element of 1:1:4. Step one was specifically as follows:
Step 1, preparation of an iron-phosphorus solution: ferrous nitrate, hydrochloric acid, H₃PO₄, and pure water were mixed to obtain an iron-phosphorus solution having a ferrous ion concentration of 1.5 mol/L (wherein ferrous nitrate, H₃PO₄, and hydrochloric acid were added according to a molar ratio of the Fe element, P element and Cl element of 1:1:4), and were stirred evenly to obtain an iron-phosphorus solution, wherein the pH value of the iron-phosphorus solution was 0.25.

### Example 11

This example differs from Example 4 only in that, in Step 2, the dropwise addition time was controlled to 25 min, and the stirring was continued for 25 min after the dropwise addition was completed.

### Example 12

This example differs from Example 4 only in that in Step 3, the temperature of the second slurry was controlled to be 50°C.

### Comparative Example 1

This example differs from Example 4 only in that: in Step 1, ferrous chloride was replaced with ferrous nitrate, and hydrochloric acid was replaced with nitric acid; and in step 3, the iron phosphate slurry prepared in step 2 was heated until boiling and maintained in a boiling state for 2 h to obtain a first slurry.

### Comparative example 2

This example differs from Example 4 only in that Step 1 further comprises adjusting the pH value of the iron-phosphorus solution to 2 by means of an alkaline solution. Step 1 specifically comprises the following steps:
mixing ferrous chloride, hydrochloric acid, H₃PO₄, and pure water to obtain an iron-phosphorus solution having a ferrous ion concentration of 1.5 mol/L (wherein ferrous chloride, H₃PO₄, and hydrochloric acid were added according to a molar ratio of the Fe element, P element and Cl element of 1:1:3), stirring evenly to obtain an iron-phosphorus solution, and dropwise adding 1 mol/L aqueous sodium hydroxide solution to the iron-phosphorus solution to adjust the pH of the iron-phosphorus solution to 2.

### Comparative Example 3

This comparative example differs from Example 4 only in that in Step 2, the base solution was heated to a temperature of 65°C.

### Comparative Example 4

This comparative example differs from Example 4 only in that in Step 3, the boiling state was maintained for 30 minutes.

### Comparative Example 5

This comparative example differs from Example 4 only in that in Step 4, the low-temperature dilution water was not used, and the temperature was naturally cooled to room temperature to obtain the second slurry.

### Comparative Example 6

A traditional iron process was used for preparing iron phosphate, and the specific steps were as follows:
Step 1, preparation of ferrous dihydrogen phosphate: pure water was added to phosphoric acid to formulate a dilute phosphoric acid solution having a mass fraction of 30% for use, the dilute phosphoric acid solution was heated to 50°C, after reaching the temperature, an appropriate amount of iron powder was added to the dilute phosphoric acid solution (wherein the iron powder was added according to a molar ratio of the Fe element to the phosphorus element of 1:2), and after the reaction was completed, the slurry was filtered to obtain an ferrous dihydrogen phosphate solution.
Step 2, preparation of iron phosphate: the ferrous dihydrogen phosphate solution prepared in Step 1 was taken, pure water was added to formulate a ferrous dihydrogen phosphate solution having a molar concentration of 1 mol/L, the formulated ferrous dihydrogen phosphate solution was heated to 80°C, after the completion of the heating, a hydrogen peroxide solution (the mass fraction of hydrogen peroxide in the hydrogen peroxide solution was 28%, and the hydrogen peroxide solution was added at a molar ratio of H₂O₂ to the Fe element of 1.5:2.0) was uniformly added dropwise to the ferrous dihydrogen phosphate solution, the dropwise addition time being controlled to be 105 min, and after the completion of the dropwise addition, the temperature was maintained for 60 min to obtain an iron phosphate slurry.
Step 3: the iron phosphate slurry prepared in step 2 was filtered, the filtered product was washed in a counter current until the conductivity of the washing water was less than 500 us/cm to obtain an iron phosphate filter cake, and the filter cake was dried at 98°C to obtain iron phosphate.

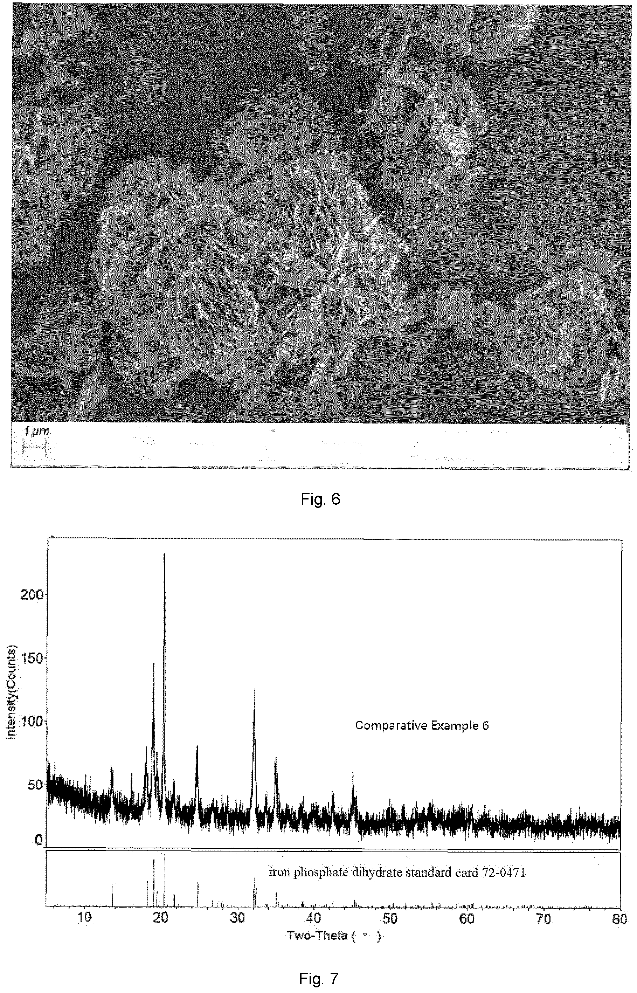

The SEM images of the iron phosphate material prepared in Comparative Example 6 are shown in Figs. 5 and 6. The microstructure is sheet-shaped. The XRD image of the iron phosphate material is shown in Fig. 7. The prepared iron phosphate material is a single iron phosphate phase. According to the particle size detection data, it can be determined that the iron phosphate material prepared in Comparative Example 6 has a D50 particle size of 4.833 µm and a D100 particle size of 15.721 µm, and the particle size is significantly higher than that of the iron phosphate material prepared in Example 1.

### II. Test methods

### 1. Property testing of iron phosphate material

1) Scanning electron microscopy (SEM) was used to characterize the inner diameter and outer diameter of the material, wherein the inner diameter of the iron phosphate material was counted and averaged to obtain the average inner diameter, and the outer diameter of the material was counted and averaged to obtain the average outer diameter. The average inner diameter, average outer diameter, and the ratio of the average inner diameter to the average outer diameter of the material are shown in Table 1.
2) An X-ray diffractometer was used to characterize the material.
3) The specific surface area of the material was tested by the nitrogen adsorption BET test method, with reference to the standard GB/T9587-2017. The test results of the specific surface area of the iron phosphate materials prepared in the examples and the comparative examples are shown in Table 1.
4) The particle D0 size (µm), particle D10 size (µm), particle D50 size (µm), particle D90 size (µm), particle D99 size (µm), and particle D100 size (µm) of the materials were measured by a laser particle size analyzer. The particle size distribution (D90-D10)/D50 and particle size test results are shown in Table 1.
5) Sanding time test
   The iron phosphate material was sanded until the D50 particle size of the material was 350 nm, the sanding was stopped, and the sanding time was recorded.
6) An inductive coupling plasma spectrometer was used to analyze the composition of elements of the material, and the results are shown in table 2.

### III. Analysis of test results of each of the Examples and Comparative Examples

**Table 1**

| Examples | Specific surface area/ m²/g | Average inner diameter/ µm | Average outer diameter/ µm | Ratio of average inner diameter to average outer diameter | Particle size (unit µm) | | | | | | | Sand ing time/ min |
|---|---|---|---|---|---|---|---|---|---|---|---|---|
| | | | | | D0/ µm | D10/ µm | D50/ µm | D90/ µm | D99/ µm | D100/ µm | (D90-D1 0)/D50 | |
| Example 1 | 15.74 | 305.11 | 711.46 | 0.43 | 0.114 | 0.417 | 0.82 | 1.527 | 2.745 | 3.846 | 1.35 | 90 |
| Example 2 | 13.47 | 240.41 | 614.70 | 0.39 | 0.122 | 0.376 | 0.762 | 1.331 | 2.479 | 2.984 | 1.25 | 76 |
| Example 3 | 14.54 | 370.22 | 900.23 | 0.41 | 0.152 | 0.443 | 0.84 | 1.62 | 2.77 | 3.55 | 1.40 | 95 |
| Example 4 | 14.22 | 287.56 | 730.45 | 0.39 | 0.132 | 0.325 | 0.76 | 1.44 | 2.55 | 3.69 | 1.47 | 77 |
| Example 5 | 13.27 | 330.12 | 780.45 | 0.42 | 0.125 | 0.401 | 0.81 | 1.72 | 2.67 | 3.91 | 1.63 | 82 |
| Example 6 | 15.22 | 276.54 | 657.14 | 0.42 | 0.117 | 0.339 | 0.75 | 1.37 | 2.34 | 3.66 | 1.37 | 93 |
| Example 7 | 15.44 | 308.99 | 740.12 | 0.42 | 0.143 | 0.361 | 0.86 | 1.45 | 2.92 | 3.73 | 1.27 | 87 |
| Example 8 | 15.21 | 275.46 | 690.56 | 0.40 | 0.117 | 0.350 | 0.77 | 1.63 | 2.96 | 3.71 | 1.66 | 85 |
| Example 9 | 14.33 | 280.36 | 750.66 | 0.37 | 0.122 | 0.365 | 0.77 | 1.53 | 2.68 | 3.47 | 1.51 | 82 |
| Example 10 | 16.11 | 310.54 | 800.32 | 0.39 | 0.134 | 0.411 | 0.801 | 1.66 | 2.33 | 3.44 | 1.56 | 86 |
| Example 11 | 14.77 | 291.33 | 801.97 | 0.36 | 0.162 | 0.313 | 0.83 | 1.51 | 2.86 | 3.46 | 1.44 | 92 |
| Example 12 | 15.66 | 330.46 | 801.42 | 0.41 | 0.133 | 0.307 | 0.81 | 1.77 | 2.77 | 3.78 | 1.81 | 87 |
| Comparative Example 1 | 1.33 | / | / | / | 0.229 | 1.488 | 4.833 | 9.922 | 14.052 | 15.721 | 1.75 | 280 |
| Comparative Example 2 | 4.23 | / | / | / | 0.407 | 1.26 | 3.12 | 15.39 | 98.29 | 162.15 | 4.53 | 300 |
| Comparative Example 3 | 1.52 | / | / | / | 0.358 | 2.547 | 8.141 | 17.365 | 26.667 | 34.761 | 1.82 | 287 |
| Comparative Example 4 | 1.78 | / | / | / | 0.364 | 5.074 | 12.701 | 36.791 | 67.737 | 87.051 | 2.50 | 260 |
| Comparative Example 5 | 7.83 | / | / | / | 0.406 | 0.623 | 1.121 | 2.182 | 3.109 | 3.549 | 1.39 | 150 |
| Comparative Example 6 | 8.77 | / | / | / | 0.229 | 1.488 | 4.833 | 9.922 | 14.052 | 15.721 | 2.60 | 270 |

| | | | | | | | | | | | | |
|---|---|---|---|---|---|---|---|---|---|---|---|---|
| Note: in Table 1, "/" indicates that the prepared iron phosphate material has a sheet structure and does not have inner and outer diameter data. | | | | | | | | | | | | |

**Table 2**

| Examples | Content of impurity element (unit: ppm) | | | | | | | | | | | | | |
|---|---|---|---|---|---|---|---|---|---|---|---|---|---|---|
| | Al | Ca | Cd | Co | Cr | Cu | K | Mg | Mn | Na | Ni | Pb | Ti | Zn |
| Example 1 | 3.4 | 1.66 | 0.1 | 0.53 | 6.72 | 1.28 | 0 | 0.12 | 1.27 | 2.38 | 1.31 | 8.67 | 2.93 | 5.04 |
| Example 2 | 4.56 | 0.24 | 0.45 | 0.7 | 9.16 | 0.24 | 0 | 0 | 0.31 | 3.25 | 2.44 | 16.42 | 5.35 | 1.21 |
| Example 3 | 7.5 | 2.45 | 0.16 | 1.02 | 5.81 | 0.31 | 0 | 0.4 | 2.72 | 0.53 | 2.98 | 10.7 | 6.08 | 0 |
| Example 4 | 8.72 | 0.55 | 0.33 | 0.13 | 4.77 | 0.16 | 0 | 0.23 | 4.14 | 0.77 | 3.81 | 9.76 | 5.59 | 0 |
| Example 5 | 8.17 | 1.16 | 0.31 | 0.27 | 6.66 | 0.31 | 0 | 0.25 | 3.64 | 0.62 | 4.16 | 13.33 | 6.49 | 0 |
| Example 6 | 3.13 | 0.94 | 0.1 | 0.89 | 3.55 | 0.05 | 0 | 0.29 | 1.94 | 1.7 | 3.24 | 13.7 | 6.54 | 3.51 |
| Example 7 | 4.07 | 2.68 | 0.09 | 0.92 | 3.8 | 0.11 | 0 | 0.48 | 1.65 | 1.86 | 4.79 | 13.22 | 6.79 | 2.7 |
| Example 8 | 3.92 | 1.67 | 0 | 0.69 | 3.36 | 0 | 0 | 0.65 | 1.18 | 2.43 | 2.07 | 14.46 | 6.31 | 0.49 |
| Example 9 | 2.71 | 1.51 | 0.03 | 1.08 | 3.61 | 0.46 | 0 | 0.43 | 2.46 | 1.64 | 5.24 | 11.58 | 6.65 | 2.29 |
| Example 10 | 4.1 | 1.34 | 0.24 | 0.81 | 3.6 | 0.28 | 0 | 0.71 | 1.04 | 12.76 | 3.5 | 10.57 | 6.89 | 4.02 |
| Example 11 | 2.96 | 1.34 | 0.1 | 1.28 | 3.5 | 0.24 | 0 | 1.58 | 1.84 | 2.15 | 2.1 | 14.57 | 6.5 | 1.75 |
| Example 12 | 1.45 | 0.71 | 0.08 | 0.8 | 3.64 | 0.3 | 0 | 0.33 | 0.9 | 1.35 | 3.81 | 14.81 | 6.29 | 0.35 |
| Comparative Example 1 | 7.76 | 1.19 | 0.24 | 0.68 | 3.59 | 0.04 | 0 | 1.77 | 2.69 | 1.47 | 4.52 | 13.39 | 5.5 | 0 |
| Comparative Example 2 | 7.66 | 1.1 | 0.48 | 0.62 | 6.75 | 0.14 | 0 | 0.21 | 1.61 | 0.67 | 4.61 | 18.54 | 5.64 | 0 |
| Comparative Example 3 | 7.66 | 1.13 | 0.06 | 0.78 | 8.97 | 0.05 | 0 | 0.2 | 1.82 | 0.9 | 5.58 | 11.58 | 5.33 | 0.7 |
| Comparative Example 4 | 7.88 | 1.1 | 0.34 | 0.63 | 8.31 | 0.2 | 0 | 0.2 | 1.51 | 1.09 | 6.31 | 10.07 | 5.28 | 0 |
| Comparative Example 5 | 7.9 | 0.89 | 0.51 | 0.76 | 5.39 | 0.12 | 0 | 0.15 | 1.2 | 1.57 | 3.17 | 13.71 | 5.17 | 0.61 |
| Comparative Example 6 | 8.37 | 11.11 | 0.43 | 0.55 | 29.48 | 0 | 0 | 0.52 | 1.91 | 1.24 | 5.16 | 13.98 | 3.55 | 1.63 |

It can be seen from the data in table 1 that the size of the iron phosphate materials prepared in Examples 1-12 of the present application was significantly smaller than the size of the iron phosphate materials prepared in Comparative Examples 1-6, and under the same conditions, the time required for sanding to a D50 particle size of 350 nm in the iron phosphate materials prepared in Examples 1-12 of the present application was less than 100 min, which effectively reduced the energy consumption of the sanding process and improved the process efficiency.

It can be seen from the comparison between Example 4 and Comparative Example 1 that compared with Comparative Example 1 in which ferrous chloride and hydrochloric acid were replaced by ferrous nitrate and nitric acid, the size of the iron phosphate material obtained in Example 4 was significantly reduced, indicating that the full chloride ion system using ferrous chloride and hydrochloric acid as the ferrous ion source and the chloride ion source can make full use of the volatility and complexing property of hydrogen chloride to form iron phosphate-hydrochloric acid complexes with the iron phosphate particles in the iron phosphate slurry, and the iron phosphate was protected in the form of a complex to avoid agglomeration of the iron phosphate particles. Then, the slurry comprising iron phosphate and hydrochloric acid was decomplexed under low temperature conditions by dilution-cold activation decomplexation, thereby facilitating the formation of small-sized iron phosphate particles.

It can be seen from the comparison between Example 4 and Comparative Example 2 that compared with the control of the pH value of the iron phosphate solution to 2 by the aqueous sodium hydroxide solution in Comparative Example 2, the control of the pH value of the iron phosphate solution to 0.3 in Example 4 resulted in a significant decrease in the size of the obtained iron phosphate material, indicating that the control of the pH value of the iron phosphate solution to not more than 1.5 was conducive to obtaining an iron phosphate material having a smaller size.

It can be seen from Example 4 and Comparative Example 3 that compared with Comparative Example 3, in Example 4, the iron phosphate solution was heated to 70°C or higher to prepare an iron phosphate slurry, which improved the ferrous oxidation efficiency and facilitated the rapid generation of a large number of small-sized iron phosphate particles; therefore, in the subsequent high-temperature boiling stage, plenty of iron phosphate-hydrochloric acid complexes were formed, the iron phosphate-hydrochloric acid complexes were stably and evenly dispersed in the slurry, and the size of the obtained iron phosphate material was significantly reduced.

It can be seen from Example 4 and Comparative Example 4 that compared with Comparative Example 4, in Example 4, maintaining a longer boiling state was conducive to the full complexation of the iron phosphate particles in the system to form iron phosphate-hydrochloric acid complexes, and protecting iron phosphate in the form of complexes to avoid agglomeration of the iron phosphate particles, thereby obtaining an iron phosphate material having a smaller size.

It can be seen from Example 4 and Comparative Example 5 that in Comparative Example 5, no low-temperature dilution water was added, the cold quenching effect was reduced, the whole size of the iron phosphate particles and the D50 particle size were obviously higher, and the time required for sanding to a particle size of 350 nm was long.

It can be seen from Example 4 and Comparative Example 6 that, by using the traditional iron process route in Comparative Example 6, the prepared iron phosphate particles had a larger D50 particle size, which was significantly higher than that of the iron phosphate material in Example 4.

It can be seen from the comparison between Example 4 and Example 7 that, compared with Example 7 wherein ferrous nitrate was used as the ferrous source, that is, the nitrate anion and the chloride anion were introduced at the same time, the full-anion system used in Example 4 made it easier to obtain an iron phosphate material with a smaller size.

Compared with Example 10, the D50 particle sizes, average inner diameters and average outer diameters of Example 8 and Example 9 were significantly smaller than those of Example 10, wherein the molar ratio of iron, phosphorus and chlorine was within the range of (0.8-1.2): (0.8-2): (0.5-3) of Example 8 and Example 9, which are more conducive to obtaining an iron phosphate material having a smaller overall size.

It can be seen from the comparison between Example 4 and Example 11 that controlling the dropwise addition time of the hydrogen peroxide solution to be 5 min-15 min and the stirring time to be 5 min-15 min can obtain an iron phosphate material with a smaller size. Compared with Example 11, in Example 4, using the described faster dropwise addition rate and shorter stirring time facilitates fast generation of iron phosphate crystal nuclei and suppresses the growth crystals, which is conducive to the formation of more iron phosphate-hydrochloric acid complexes in the subsequent high-temperature boiling stage, the stable and even dispersion of the iron phosphate-hydrochloric acid complexes in the iron phosphate slurry, and reduction of the agglomeration of iron phosphate particles, thereby obtaining an iron phosphate material having a smaller size.

It can be seen from the comparison between Example 4 and Example 12 that by controlling the temperature difference between the second slurry and the first slurry to be not less than 60°C, an iron phosphate material having a smaller size can be obtained. Compared with Example 12, Example 4 used a larger temperature difference, and the larger temperature difference was more conducive to the iron phosphate-hydrochloric acid decomplexation and the cold quenching refinement, thereby facilitating the production of an iron phosphate material with a smaller size.

It can be seen from Table 2 that, compared with Comparative Example 6, the iron phosphate materials prepared in Examples 1-12 of the present application had a relatively low content of metal impurities as a whole. According to the detection data of impurity elements of iron phosphate prepared by using a traditional iron process in Comparative Example 6, the main reason for the high content of the impurity elements was that the phosphorus excess coefficient in the traditional iron process was large (the ratio of iron to phosphorus: Fe/P = 1/2), after most of the Fe element precipitated in the system, phosphorus formed precipitate with other impurity cations. However, in the preparation method for an iron phosphate material provided in Examples 1-11 of the present application, the iron-phosphorus ratio was controlled to be 1:(1-1.2), after iron phosphate precipitated, there were fewer free phosphate radicals, and the impurity cations were unlikely to produce phosphate precipitate.

It should be noted that the present application is not limited to the embodiments above. The embodiments above are mere examples, and embodiments having substantially the same configurations and effects as those of the technical idea within the scope of the present disclosure are all included in the technical scope of the present disclosure. It should be noted that other embodiments obtained by applying various modifications that can be conceived by a person skilled in the art and by combining some of the components of the embodiments without departing from the spirit of the present application are also included in the scope of the present application.

## Claims

1. An iron phosphate material, wherein the iron phosphate material comprises iron phosphate particles, at least one of the iron phosphate particles has a ring structure, and the D50 particle size of the iron phosphate particles is less than 1 µm.

2. The iron phosphate material according to claim 1, wherein a particle size agglomeration index of the iron phosphate particles satisfies: 0.5 ≤ (D90-D10)/D50 ≤ 2.

3. The iron phosphate material according to claim 1, wherein the ratio of the average inner diameter to the average outer diameter of the ring structure of an iron phosphate particle is among (0.35-0.48):1;
the average inner diameter of the ring structure of an iron phosphate particle is in the range of 178 nm-559 nm, and the average outer diameter of the ring structure of an iron phosphate particle is in the range of 474.60 nm-1188.90 nm.

4. The iron phosphate material according to any one of claims 1 to 3, wherein the specific surface area of the iron phosphate material is 13 m²/g-20 m²/g.

5. A preparation method for an iron phosphate material, comprising the following steps:
preparing an iron-phosphorus solution comprising a ferrous ion source, a chloride ion source, and a phosphate ion source, wherein the pH value of the iron-phosphorus solution is not greater than 1.5;
heating the iron-phosphorus solution to 70°C or more, and then adding an oxidant to the iron-phosphorus solution to obtain an iron phosphate slurry;
heating the iron phosphate slurry until boiling, and after the iron phosphate slurry changes color, continuing to maintain the boiling state for 1.5 h-4 h to obtain a first slurry;
mixing the first slurry with low-temperature dilution water to obtain a second slurry; and
performing solid-liquid separation on the second slurry to obtain an iron phosphate material.

6. The preparation method for an iron phosphate material according to claim 5, wherein the molar ratio of iron element, phosphorus element and chlorine element in the iron-phosphorus solution is (0.8-1.2):(0.8-2):(0.5-3);
the oxidant is an aqueous solution of hydrogen peroxide , the molar ratio of hydrogen peroxide in the aqueous solution of hydrogen peroxide to iron element in the iron-phosphorus solution is (0.6-1):1, and the concentration of iron element in the iron-phosphorus solution is 0.5 mol/L-2.0 mol/L;
the mass fraction of hydrogen peroxide in the aqueous solution of hydrogen peroxide is 20%-30%;
the ferrous ion source is selected from one or two of ferrous nitrate and ferrous chloride;
the chlorine ion source is selected from at least one of hydrochloric acid and ferrous chloride; and
the phosphate ion source is selected from at least one of H₃PO₄, (NH₄)H₂PO₄, and (NH₄)₂HPO₄.

7. The preparation method for an iron phosphate material according to claim 6, wherein the preparation steps for the iron-phosphorus solution comprise:
heating a dilute hydrochloric acid aqueous solution to 50°C-70°C, then adding an elemental iron material, and reacting same to obtain a ferrous chloride solution, wherein the concentration of the dilute hydrochloric acid aqueous solution is 1.0 mol/L-4.0mol/L; and
adding phosphoric acid and water to the ferrous chloride solution, mixing, and controlling the pH value not more than 1.5 to obtain an iron-phosphorus solution;
heating the iron-phosphorus solution to 70°C or more, and then adding an oxidant to the iron-phosphorus solution to obtain an iron phosphate slurry, the steps comprise :
heating the iron-phosphorus solution to 70°C-80°C, and then adding an aqueous solution of hydrogen peroxide to the iron-phosphorus solution;
mixing the first slurry with low-temperature dilution water to obtain a second slurry, the steps comprise:
mixing the first slurry with the low-temperature dilution water, and stirring until discoloration to obtain a second slurry;
performing solid-liquid separation on the second slurry to obtain the iron phosphate material, the steps comprise:
performing solid-liquid separation on the second slurry, washing the obtained solid, and then drying same at 90°C-120°C to obtain the iron phosphate material.

8. The preparation method for an iron phosphate material according to any one of claims 6 to 7, wherein the pH value of the iron-phosphorus solution is 0.2-1.5;
the temperature difference between the second slurry and the first slurry is not less than 60°C; and
the mass ratio of the first slurry to the low-temperature dilution water is 1:(10-30).

9. A cathode material, comprising at least one of a lithium iron phosphate material and a lithium iron manganese phosphate material, wherein the lithium iron phosphate material is prepared from the iron phosphate material according to any one of claims 1 to 4 or the iron phosphate material prepared by the preparation method for an iron phosphate material according to any one of claims 5 to 8, and the lithium iron manganese phosphate material is prepared from the iron phosphate material according to any one of claims 1 to 4 or the iron phosphate material prepared by the preparation method for an iron phosphate material according to any one of claims 5 to 8.

10. A cathode sheet, wherein the cathode sheet comprises the cathode material according to claim 9.

11. A secondary battery, comprising a cathode, wherein the sheet used for the cathode is the cathode sheet according to claim 10.
